# EUROPÄISCHE PATENTANMELDUNG

(11) **EP 1 972 298 A1**
(43) Veröffentlichungstag der Anmeldung: **24.09.2008**
(21) Anmeldenummer: 08005002.4
(22) Anmeldetag: 18.03.2008
(51) Int. Cl.: A61C 8/00, C25D 9/06

(54) **Zahnfarbene biokompatible Beschichtung dentaler Implantate**

(30) Priorität: 20.03.2007 DE 102007013915
(71) Anmelder: Heraeus Kulzer GmbH, 63450 Hanau (DE)
(72) Erfinder: Martinovic, Sandra, Dr., 65187 Wiesbaden (DE); Schreckenbach, Joachim, Dr., 09337 Wüstenbrand (DE)
(74) Vertreter: Kühn, Hans-Christian

(57) **Zusammenfassung**

Es werden Zirkonium-Dentalimplantate beschrieben, aufweisend auf mindestens einem Teil der Oberfläche eine anodisch aufgebrachte, zahnfarbene Oxidschicht. Die Schicht wir vorzugsweise mittels anodischer Oxidation in Natronwasserglaslösung aufgebracht.

## Beschreibung

Die Erfindung betrifft die zahnfarbene biokompatible Beschichtung dentaler Implantate.

Implantathersteller versuchen auf verschiedene Weise, zahnfarbene Beschichtungen auf Dentalimplantaten zu generieren, vor allem im ästhetisch kritischen Halsbereich. Hierzu sind folgende Verfahren bekannt:
- Nachträglich auf ein fertig produziertes Titanimplantat eine weiße Beschichtung nur im Halsbereich aufzubringen. Ein Nachteil dabei kann darin bestehen, dass die Haftfestigkeit zu wünschen übrig lässt.
- Titanimplantate aus 2 Werkstoffen zu fertigen und somit ein Hybriddesign zu generieren. Der Halsbereich ist in diesem Fall aus Keramik und mit einem Titananteil werkseitig verklebt, so z.B. bei Produkten der Firma Brasseler (DE10251469A1). Probleme dabei kann es bei der Dauerhaftigkeit der Hybridverbindung und der Festigkeit des Zirkonoxids geben, welche die prothetische Konstruktion tragen muss.
- Einen Kunststoffkern in eine Titanhülle einzubetten. Die Titanhülle reicht aber nur bis kurz unter den Halsbereich, so dass in diesem Bereich der Kunststoff freiliegt, wie z.B. bei der Vorrichtung der Fa. Straumann, beschrieben in US20050266382A1. Nachteilig dabei kann allgemein die mangelnde Biokompatibilität von Kunststoffen sein.
- Das gesamte Implantat aus Zirkonoxid zu fertigen, so dass der komplette Implantatkörper eine weiße Farbe aufweist, wie z.B. bei Implantaten der Firma Nobel Biocare. Der Nachteil kann zum einen in einer geringen Osseointegration und zum anderen in den mechanischen Eigenschaften des Werkstoffes Zirkonoxid bestehen.

Gemäß US5478237 ist eine dünne, goldfarbene Beschichtung von Titan mittels anodischer Oxidation bekannt. In US5211833 wird eine 1-40 µ starke Oxidschicht auf Zr mittels anodischer Oxidation in NO₃-haltige alkoholischen Elektrolyten vorgeschlagen. Die praktischen Beispiele beschränken sich allerdings auf das Material Ti-6AI-4V. Die Schicht soll zur Minimierung der Abgabe von lonen aus dem Material dienen. Vorzugsweise wird auf diese Schicht noch eine bioaktive Calciumphosphatschicht aufgebracht.

Gemäß EP1290998B1 werden Implantatelemente aus Zr ein oder mehrfach mit ZrO₂ beschichtet und komprimiert, so dass schließlich eine Schicht von unter 5 µm Dicke erhalten wird.

Es stellt sich die Aufgabe, ästhetisch befriedigende Implantate mit dauerhafter Haltbarkeit bereitzustellen und die oben beschriebenen, möglichen Nachteile zu beseitigen.

Es wurde gefunden, dass mit dem Verfahren der anodischen Oxidation auf mindestens einem Teil der Oberfläche von Zirkoniumimplantaten eine die Aufgabe lösende, überraschend haftfeste, biokompatible, zahnfarbene Schicht von Zirkonoxid aufgebracht werden kann.

Die Erfindung betrifft demnach Zirkonium-Dentalimplantate, aufweisend auf mindestens einem Teil der Oberfläche eine mit anodischer Oxidation aufgebrachte, zahnfarbene Oxidschicht, die vorzugsweise eine Dicke von 0,2 bis 20 µm aufweist. Es ist möglich, dass die Schicht selektiv im Halsbereich aufgebracht ist.

Die Schicht hat eine hohe Haftfestigkeit, so dass die biomechanischen Eigenschaften des Metallimplantats erhalten bleiben. Die Biokompatibilität von Zirkonium ist aus der Orthopädie hinlänglich bekannt, z.B. von dem Material "Oxinium" der Fa. Smith and Nephew. Dabei handelt es sich um eine metallische Zirkonium-Niob-Legierung, bei der definierte Flächen nach einem Wärmebehandlungsprozess eine Umwandlung in eine Zirkoniumoxidkeramik erfahren. Es handelt sich dabei weder um eine Beschichtung - mit dem Nachteil eines Härte- bzw. Elastizitätssprunges in der Grenzschicht - noch um eine spröde und damit bruchgefährdete Vollkeramik.

Die Vorteile der erfindungsgemäßen Beschichtung von Dentalimplantaten sind folgende:
- Die biomechanischen Eigenschaften des Metalls bleiben erhalten. Die Sprödigkeit des Zirkonoxids wirkt sich bei Vollzirkonimplantaten unvorteilhaft aus.
- Die Haftfestigkeit reicht aus, um beim Inserieren des Implantates die Schicht stabil zu halten. Bei nachträglich aufgebrachten Beschichtungen ist dies meist nicht zu gewährleisten.
- Die Biokompatibilität von Zirkonium als Metall ist erwiesen.
- Die erfindungsgemäße Beschichtung bietet die Möglichkeit, das ästhetische Erscheinungsbild von Implantaten im Zahnhalsbereich stark zu verbessern. Der Effekt ist auf Grund der guten Adhäsion und Haltbarkeit dauerhaft.

Die Erfindung betrifft auch Verfahren zur Herstellung eines mindestens partiell oxidisch beschichteten Zirkonium-Dentalimplantats mit den Schritten
**A** Einbringen des betreffenden Teils des Zirkonium-Dentalimplantats in eine Elektrolytlösung,
**B** Schalten als Anode,
**C** Anlegen einer Spannung.
Das Verfahren der anodischen Oxidation ist bekannt, und dabei können zahlreiche wässrige oder alkoholische, saure oder alkalische Elektrolytlösungen eingesetzt werden. Als vorteilhaft haben sich wässrige Elektrolytlösungen, besonders Natronwasserglas-Lösungen, erwiesen. Natronwasserglas wird auch als Natriummetasilikat oder Natriumsilikat-Lösung bezeichnet. Es handelt sich um eine alkalische Lösung. Das zu beschichtende Zirkoniumteil wird zweckmäßig in die Lösung getaucht und als Anode geschaltet. Eine Spannung wird angelegt, vorzugsweise eine Impulssspannung. Temperatur, Stromdichte und Zeit können dabei variieren bzw. sind aufeinander abzustimmen. Je nach Schichtdicke können Abstufungen von Weiß bis Grau erzeugt werden. Die Schichtdicke variiert vorzugsweise im Beriech von 0,2 bis 20 µm.

Die Erfindung wird anhand des folgenden Ausführungsbeispiels näher erläutert:

### Beispiel:

Eine rechteckige Probe aus Zirkonium (99,8%) mit den Abmessungen 12 mm x 10 mm x 0,127 mm wurde bei einer Temperatur von 28 °C in einer Elektrolytlösung von einem Teil Natronwasserglas 37/40, Dichte 1,35 g/cm³ und drei Teilen Reinstwasser anodisiert.
Die Anodisation erfolgte unter Anwendung einer Impulsspannung bei einer mittleren Stromdichte von 0,12 A/cm² während einer Beschichtungszeit von 150 s.
Es ergab sich eine weiße, maximal 20 µm dicke Beschichtung.

## Patentansprüche

1. Zirkonium-Dentalimplantat, aufweisend auf mindestens einem Teil der Oberfläche eine mit anodischer Oxidation aufgebrachte, zahnfarbene Oxidschicht.

2. Zirkonium-Dentalimplantat nach Anspruch 1, wobei die Schicht eine Dicke von 0,2 bis 20 µm aufweist.

3. Zirkonium-Dentalimplantat nach Anspruch 1 oder 2, wobei die Schicht selektiv im Halsbereich aufgebracht ist.

4. Verfahren zur Herstellung eines mindestens partiell oxidisch beschichteten Zirkonium-Dentalimplantats mit den Schritten
A Einbringen des betreffenden Teils des Zirkonium-Dentalimplantats in eine Elektrolytlösung,
B Schalten als Anode,
C Anlegen einer Spannung.

5. Verfahren nach Anspruch 4, wobei als Elektrolytlösung Natronwasserglas in Wasser eingesetzt wird.

6. Verfahren nach Anspruch 4, wobei in Schritt C eine Impulsspannung angelegt wird.
